# EUROPEAN PATENT APPLICATION

(11) **EP 0 540 366 A1**
(43) Date of publication of application: **05.05.1993**
(21) Application number: 92309996.4
(22) Date of filing: 30.10.1992
(51) Int. Cl.: C04B 41/87, B23B 27/14

(54) **Tool insert**

(30) Priority: 30.10.1991 GB 9122983; 18.09.1992 GB 9219775
(71) Applicant: DE BEERS INDUSTRIAL DIAMOND DIVISION (PROPRIETARY) LIMITED, Johannesburg, Transvaal (ZA)
(72) Inventor: Phaal, Cornelius, South Ascot, Berkshire, SL5 9LS (GB); Shafto, George Richard, Port Soderick, Isle of Man (GB); Sweeney, Charles Gerard, Hayes, Middlesex UB3 3PQ (GB)
(74) Representative: Ellis-Jones, Patrick George Armine

(57) **Abstract**

A tool insert comprises a diamond layer (10) bonded to a surface (12) of a substrate (14), the substrate (14) being a bonded silicon carbide ceramic containing 7 to 12 percent by mass free silicon. The diamond of the layer (10) is preferably CVD diamond.

## Description

### BACKGROUND OF THE INVENTION

This invention relates to a tool insert and more particularly to an insert for a cutting tool.

Tool inserts are known in which a full layer of diamond is applied to a surface of a suitable substrate using chemical vapour deposition (hereinafter referred to as "CVD"). The substrates for such tool inserts are generally ceramic in nature such as cemented carbide, silicon nitride, sialon, silicon carbide, or the like.

One of the major problems with tool inserts of this nature is that it is difficult to achieve a good and consistent bond between the diamond layer and the substrate and in some cases the bond may degrade.

Japanese Patent Abstract No. 61-291493 describes the use of a silicon nitride or silicon carbide substrate as a base for depositing a layer of CVD diamond thereon. No mention is made of the nature of the silicon carbide.

### SUMMARY OF THE INVENTION

According to the present invention, there is provided a tool insert comprising a diamond layer, preferably a CVD diamond layer, bonded to a surface of a substrate, the substrate being a bonded silicon carbide ceramic containing 7 to 12 percent, preferably 10 to 11,5 percent, by mass of free silicon.

### BRIEF DESCRIPTION OF THE DRAWINGS

- Figure 1: is a plan view of an embodiment of a tool insert;
- Figure 2: is a section along the line 2-2 of Figure 1; and
- Figure 3: is a perspective view of a third embodiment of a tool insert.

### DESCRIPTION OF EMBODIMENTS

It has been found that if the free silicon content of the bonded silicon carbide ceramic substrate is within the range specified above, a consistently strong bond between the diamond layer and the substrate can be achieved, particularly for CVD diamond layers. The free silicon will be uniformly distributed through the ceramic with a substantial absence of any pools of free silicon.

The diamond layer may be deposited on a surface of the bonded silicon carbide ceramic substrate using any known CVD method. In CVD methods, a gaseous carbon compound in the presence of hydrogen or oxygen is decomposed creating a plasma containing carbon ions or radicals which deposit on the surface of the substrate to form diamond. The gaseous carbon compound may be decomposed by RF or microwave energy, or by heat using a hot filament. These methods are all well established and described in the literature.

The silicon carbide particle size of the bonded silicon carbide ceramic is preferably fine to minimise edge chipping of the tool insert in use. The preferred particle size range for the silicon carbide is 2 to 50 microns, preferably 5 to 30 microns.

The diamond layer may have any suitable thickness, but will generally have a thickness of less than 100 microns. Diamond layer thicknesses of 20 to 30 microns have proven to be particularly suitable. The diamond particles in the layer will typically have a size of 2 to 10 microns.

The substrate has a layer of the diamond deposited on a surface thereof. The diamond layer presents a cutting edge or point for the tool insert. In one preferred form of the invention, the substrate has major flat surfaces joined by a side surface, the diamond layer being applied to at least part of one of the major flat surfaces. Generally, that diamond layer will cover the entire major flat surface to which it is applied. It is preferred that the diamond layer is polished.

In another preferred form of the invention, the substrate has major flat surfaces joined by a side surface and a diamond layer is applied to at least part of one of the major flat surfaces such that it continues over an edge between that major flat surface and the side surface. The edge may have a radius in which event the portion of the diamond layer applied to the edge will have a complemental radius. If the diamond layer which is applied to the major flat surface is polished, polishing has the effect of reducing and sharpening the diamond layer radius. Improved cutting edge sharpness is achieved.

The tool insert may be used for a variety of cutting operations such as turning, milling and drilling. The tool inserts are particularly useful for cutting non-ferrous abrasive materials.

An example of a suitable bonded silicon carbide ceramic is one which has a free silicon content of 11,4 percent by mass and 87,9 percent by mass of silicon carbide uniformly distributed through the ceramic and the following physical, mechanical and thermal properties:

| **Physical Properties** | |
|---|---|
| Density | 3,10 g/cm³ |
| Open porosity | 0% |
| Grain size (average) | 10µm |

| **Mechanical Properties** | | |
|---|---|---|
| Flexural strength (3 point bend) | 400 MPa at | 20°C |
| Flexural strength (3 point bend) | 400 MPa at | 1000°C |
| Tensile modulus | 390 GPa at | 20°C |
| Poissons ratio | 0.24 | |
| Compressive strength | 2000MPa at | 20°C |
| Fracture toughness K_{1c} | 4 MPam½ at | 20°C |
| Hardness Hv (50g load) | 3000Kg/mm² | |

| **Thermal Properties** | | |
|---|---|---|
| Thermal conductivity | 150Wm⁻¹K⁻¹ at | 20°C |
| Specific heat | 1100 J/kg°C | |
| Thermal expansion coefficient | 4.3x10⁻⁶/°C | |

The product Refel F® is an example of such a bonded silicon carbide ceramic.

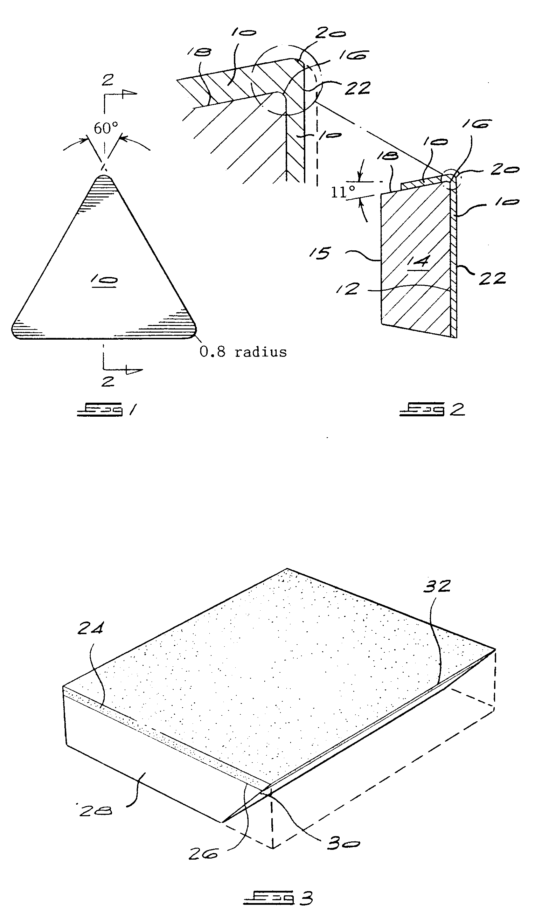

Embodiments of the invention will now be described with reference to the accompanying drawings. Referring first to Figures 1 and 2, a tool insert comprises a diamond layer 10 bonded to the top flat surface 12 of a substrate 14. The substrate also has a bottom flat surface 15. The diamond layer 10 continues over the edge 16 of the substrate and down at least part of the side surface 18. The edge 16 has a radius and the portion 20 of the diamond layer which passes over the edge 16 has a complemental radius.

The portion of the diamond layer 10 which is bonded to the surface 12 is polished creating a polished table 22. Figure 2 shows the original top surface of the diamond layer 10 in dotted lines, while the solid line 22 illustrates the polished table. It will be noted that polishing has the effect of reducing the diamond edge radius 20 and thus improves the edge sharpness. It is this diamond edge 20 which provides the cutting edge for the tool insert.

The tool insert illustrated by Figures 1 and 2 has a triangular shape in plan. The tool insert may have other shapes such as square and rectangular.

Further, the surface 12 of the substrate 14 of Figures 1 and 2 is flat. This surface may have other shapes. The diamond layer 10 will follow such other shapes.

A second embodiment of the invention is illustrated by Figure 3. In this embodiment, a diamond layer 24 is bonded to the top surface 26 of a substrate 28. The diamond layer and substrate are cut away along line 30 to produce a sharp diamond cutting edge 32. The sharpness of the edge 32 is dictated by the angle of cut-away 30. The dotted lines illustrate the original shape of the bonded product from which the tool insert was produced.

The diamond layer in the embodiments illustrated in Figures 1 to 3 is preferably a CVD diamond layer. The method of producing the CVD diamond layer may be any known in the art.

In an embodiment of the invention, a tool insert of the type illustrated by Figures 1 and 2 was manufactured by providing a bonded silicon carbide ceramic substrate having the composition and the physical, mechanical and thermal properties as set out above. A layer of CVD diamond was deposited on the surface 12 of the substrate using microwave energy to decompose a hydrogen/carbon monoxide mixture (80sccm hydrogen and 20sccm carbon monoxide) at a pressure of 20 Torr. A 20 to 30 micron thick diamond layer was deposited on the surface 12. It was found that the diamond layer adhered strongly to the substrate and performed well in the cutting of an aluminium-20 percent silicon test piece. This was so not only immediately after the tool insert had been produced, but even after a period of five months. Further, ageing, tensile fractures and delamination of the diamond film on the silicon carbide substrate had not manifested themselves either optically or by SEM (scanning electron microscopy) after a period of five months.

Similar tool inserts were produced using different gaseous carbon/hydrogen mixtures. For example, the following mixtures and pressures were used:

| H₂ (sccm) | Ar (sccm) | CH₄ (sccm) | Pressure (Torr) |
|---|---|---|---|
| 200 | 200 | 60 | 80 |
| 200 | 200 | 4 | 75 |
| 200 | 200 | 6 | 150 |
| 750 | 1440 | 14 | 130 |

In each case, a tool insert comprising a CVD diamond layer strongly bonded to the silicon carbide substrate was produced.

## Claims

1. A tool insert comprises a diamond layer (10) bonded to a surface (12) of a substrate (14), the substrate (14) being a bonded silicon carbide ceramic containing 7 to 12 percent by mass free silicon.

2. A tool insert according to claim 1 wherein the diamond is CVD diamond.

3. A tool insert according to claim 1 or claim 2 wherein the bonded silicon carbide ceramic contains 10 to 11,5 percent by mass free silicon.

4. A tool insert according to any one of the preceding claims wherein the particle size of the silicon carbide is in the range 2 to 50 microns.

5. A tool insert according to any one of claims 1 to 3 wherein the particle size of the silicon carbide is in the range 5 to 30 microns.

6. A tool insert according to any one of the preceding claims wherein the thickness of the diamond layer (10) is less than 100 microns.

7. A tool insert according to claim 6 wherein the thickness of the diamond layer (10) is in the range 20 to 30 microns.

8. A tool insert according to any one of the preceding claims wherein the size of the particles in the diamond layer (10) is in the range 2 to 10 microns.

9. A tool insert according to any one of the preceding claims wherein the substrate (14) has major flat surfaces (12, 15) joined by a side surface (18), the diamond layer (10) being applied to at least part of one (12) of the major flat surfaces.

10. A tool insert according to claim 9 wherein the diamond layer (10) covers the entire major flat surface (12) to which it is applied.

11. A tool insert according to claim 9 or claim 10 wherein the diamond layer (10) is polished.

12. A tool insert according to claim 9 or claim 10 wherein the diamond layer (10) continues over an edge (16) between the major flat surface (12) to which it is applied and the side surface (18) of the substrate (14).

13. A tool insert according to claim 12 wherein the portion of the diamond layer (10) which is applied to the major flat surface (12) is polished.

14. A tool insert according to claim 13 wherein the edge (16) of the substrate has a radius and the portion (20) of the diamond layer applied to the edge (16) has a complemental radius, the diamond layer radius being reduced and sharpened by the polishing.
